# EUROPÄISCHE PATENTSCHRIFT

(11) **EP 2 123 395 B1**
(45) Veröffentlichungstag und Bekanntmachung des Hinweises auf die Patenterteilung: **03.11.2010**
(21) Anmeldenummer: 08009492.3
(22) Anmeldetag: 23.05.2008
(51) Int. Cl.: B23Q 7/05, B65G 13/07

(54) **Werkstückzuführvorrichtung**
Workpiece feeding device
Dispositif d'alimentation en pièces

(43) Veröffentlichungstag der Anmeldung: 25.11.2009
(73) Patentinhaber: ads-tec GmbH, 70771 Leinfelden-Echterdingen (DE)
(72) Erfinder: Greif, Andreas, 73235 Weilheim u. Teck (DE); Frank, Jens, 71686 Remseck (DE)
(74) Vertreter: Wasmuth, Rolf

(56) Entgegenhaltungen:
- EP-A- 0 341 468
- EP-A- 1 525 957
- DE-A1- 1 918 745
- DE-A1- 4 111 419
- DE-U- 6 912 944

## Beschreibung

Die Erfindung betrifft eine Werkstückzuführvorrichtung zur Zufuhr von Werkstücken zu einem Bearbeitungsbereich, insbesondere an einer Bearbeitungsmaschine.

Es ist bekannt, zum Transport von Werkstücken zwischen Bearbeitungsmaschinen Rollenbahnen vorzusehen. Diese bestehen üblicherweise aus durchgehenden, an ihren Enden gelagerten Rollen, auf denen Werkstücke oder Werkstückträger mit Werkstücken aufliegen. Der Antrieb der Rollen erfolgt üblicherweise über Zahnriemen oder Ketten. Dadurch muss für jede Rolle eine separate Einstellmöglichkeit vorgesehen werden. Die Einstellung und Justage ist aufwendig.

Die DE 41 11 419 A1 zeigt eine Werkstückzufuhrvorrichtung mit einer Rollenbahn nach dem Oberbegriff des Anspruches 1. Die Rollenbahn besitzt glatte Rollen, auf denen das Fördergut aufliegt. Seitlich ist ein fördergurtähnliches Gewebeband vorgesehen, das an den Rollen anliegt und über Spannrollen zickzackförmig geführt ist. Über das Gewebeband sind alle angetriebenen Rollen angetrieben.

Die DE 69 12 944 U zeigt eine Rollenbahn mit mehreren Transportrollen, auf denen das zu fördernde Gut anliegt. Unterhalb der Transportrollen ist ein flaches Band angeordnet, das angetrieben ist und von Spannrollen gegen die Transportrollen gedrückt wird. Die Transportrollen sind an ihren Enden gelagert. Der Träger, an dem die Andrückrollen gelagert sind, ist nach oben und unten verschwenkbar, so dass die Höhenstellung der Andrückrollen verändert werden kann.

Die EP 1 525 957 offenbart einen Roboter mit zwei Roboterarmen. Der erste Roboterarm ist an einer Roboterkonsole gelagert und der zweite Roboterarm am ersten Roboterarm. In dem zweiten Roboterarm ist der Antriebsmotor für den zweiten Roboterarm angeordnet. Ferner sind zwei Arbeitsmotoren vorgesehen. Durch die Anordnung der Motoren in dem zweiten Roboterarm ist der zweite Roboterarm groß und vergleichsweise schwer.

Der Erfindung liegt die Aufgabe zugrunde, eine Werkstückzuführvorrichtung zu schaffen, die einfach aufgebaut ist und die einfach zu justieren und zu warten ist.

Diese Aufgabe wird durch eine Werkstückzuführvorrichtung mit den Merkmalen des Anspruchs 1 gelöst.

Dadurch, dass mehrere Förderrollen von einem gemeinsamen Antriebsriemen über Reibung angetrieben sind, muss für alle angetriebenen Förderrollen nur einmal die Riemenspannung eingestellt werden. Dadurch ist die Einstellung und Justage einfach. Dadurch, dass die Förderrollen über Reibung angetrieben sind, ergibt sich beim Blockieren einer Förderrolle keine Störung. Die weiteren Förderrollen werden von dem Antriebsriemen weiterhin angetrieben, so dass in der Regel ein weiterer Transport von Werkstücken möglich ist. Bei der blockierten Förderrolle reicht die vom Antriebsriemen über Reibung ausgeübte Kraft nicht aus, um die Förderrolle anzutreiben, so dass diese stehen bleibt. Dadurch ergibt sich ein störunanfälliges System. Der Antriebsriemen ist vorteilhaft als Flachriemen ausgebildet.

Ein kompakter Aufbau kann erreicht werden, wenn die Rollenbahn eine mittige Abdeckung umfasst, wobei die Förderrollen in Förderrichtung gesehen seitlich der Abdeckung angeordnet sind und wobei der Antriebsriemen unterhalb der Abdeckung angeordnet ist. Die Werkstücke oder Werkstückträger sind demnach nur seitlich an den Förderrollen geführt. Dadurch, dass der Antriebsriemen mittig unterhalb der Abdeckung angeordnet ist, ergibt sich eine schmale Baubreite der Rollenbahn. Eine Anordnung des Antriebsriemens in Draufsicht auf die Rollenbahn zwischen den Förderrollen kann auch bei einer Rollenbahn ohne mittige Abdeckung vorteilhaft sein. Ein einfacher Aufbau ergibt sich, wenn jeweils mindestens eine, insbesondere zwei Förderrollen drehfest mit einer unterhalb der Abdeckung angeordneten Förderwelle verbunden sind, wobei der Antriebsriemen an mindestens zwei Förderwellen anliegt und diese antreibt. Die Förderrollen werden demnach nicht direkt von dem Antriebsriemen, sondern indirekt über die Förderwellen angetrieben. Vorteilhaft sind alle Förderrollen von dem Antriebsriemen angetrieben. Eine Ausnahme stellen dabei die Endrollen der Rollenbahn dar, die auch nicht angetrieben sein können. Die Endrollen sind dabei die in Förderrichtung vorne und hinten liegenden Förderrollen der Rollenbahn. Eine einfache Gestaltung ergibt sich, wenn der Antriebsriemen über mehrere Umlenkrollen geführt ist, wobei der Antriebsriemen von den Umlenkrollen gegen die Förderwellen gedrückt wird. Dabei ist vorteilhaft jeweils mindestens eine Umlenkrolle zwischen zwei Förderwellen angeordnet und ragt zwischen diese ein, so dass sich ein zick-zack-förmiger Verlauf des Antriebsriemens ergibt. So lässt sich auf einfache Weise eine ausreichende Umschlingung der Förderwellen realisieren.

Eine einfache Gestaltung der Rollenbahn kann erreicht werden, wenn die Abdeckung mit zwei in Förderrichtung verlaufenden Seitenplatten und an den Seitenplatten unterhalb der Förderrollen angeordneten Tropfrinnen einteilig, insbesondere aus einem gebogenen Blech, ausgebildet ist. Die Förderrollen sind dabei an den Seitenplatten drehbar gelagert und ragen im Bereich der Seitenplatten nach außen. Dadurch, dass die Tropfrinnen einteilig mit den Seitenplatten ausgebildet sind, sind hierfür keine separaten Bauteile notwendig.

Vorteilhaft umfasst die Rollenbahn eine Antriebseinheit und eine Fördereinheit, wobei die Antriebseinheit den Antriebsriemen umfasst und wobei die Fördereinheit die Förderrollen umfasst. Zur Einstellung der Riemenspannung des Antriebsriemen ist vorteilhaft die relative Lage der Antriebseinheit gegenüber der Fördereinheit einstellbar. Dadurch ergibt sich ein einfacher Aufbau der Rollenbahn. Vorteilhaft ist die Antriebseinheit gegenüber der Fördereinheit schwenkbar. Dadurch wird eine gute Zugänglichkeit zu Wartungszwecken erreicht. Die Fördereinheit kann dabei vorteilhaft vollständig von der Antriebseinheit weggeschwenkt werden. Um eine gute Zugänglichkeit der Werkstückzuführvorrichtung zu erreichen, ist vorgesehen, dass die Rollenbahn schwenkbar an einem Gestell der Werkstückzuführvorrichtung gelagert ist.

Zweckmäßig besitzt die Werkstückzuführvorrichtung einen Schwenkarm zum Transport von Werkstücken zwischen der Rollenbahn und einem Bearbeitungsbereich. Der Schwenkarm ist insbesondere an einer Halterung angeordnet, die gegenüber dem Gestell der Werkstückzuführvorrichtung höhenverstellbar angeordnet ist. Das Werkstück oder der Werkstückträger übergreift die mittig an der Rollenbahn angeordnete Abdeckung und ragt vorteilhaft seitlich etwas nach unten, um auf den Förderrollen aufzuliegen. Um das Werkstück beziehungsweise den Werkstückträger von der Rollenbahn abzunehmen, muss der Schwenkarm eine vertikale Bewegung ausführen. Dies kann auf einfache Weise dadurch realisiert werden, dass der gesamte Schwenkarm mit der Halterung gegenüber dem Gestell der Werkstückzuführvorrichtung höhenverstellbar angeordnet ist. Für die Schwenkbewegung ist vorgesehen, dass der Schwenkarm gegenüber dem Gestell der Werkstückzuführvorrichtung von einem ersten Antrieb um eine erste Drehachse schwenkbar ist. Eine einfache Gestaltung ergibt sich, wenn der erste Antrieb mit der Halterung verbunden ist. Der erste Antrieb treibt vorteilhaft über ein Ritzel ein koaxial zur ersten Drehachse angeordnetes, mit dem Schwenkarm verbundenes Zahnrad an. Das Ritzel ist dabei vorteilhaft kleiner als das Zahnrad, so dass die Schwenkbewegung des Schwenkarms langsamer ausgeführt wird als die Drehbewegung des Antriebs.

Vorteilhaft weist der Schwenkarm eine Haltevorrichtung für mindestens ein Werkstück auf, die in einem Abstand zu der ersten Drehachse angeordnet ist und die um eine zweite Drehachse drehbar ist, die insbesondere parallel zur ersten Drehachse verläuft. Dadurch kann das Werkstück geeignet positioniert werden. Vorteilhaft ist die Haltevorrichtung um die zweite Drehachse von einem zweiten Antrieb angetrieben, der ebenfalls an der Halterung angeordnet ist. Beide Antriebe sind demnach an der Halterung und nicht an dem Schwenkarm selbst angeordnet. Vorteilhaft treibt der zweite Antrieb die Haltevorrichtung um die zweite Drehachse über einen Riemen an, der an dem Schwenkarm über eine koaxial zur ersten Drehachse angeordnete Antriebsscheibe und eine koaxial zur zweiten Drehachse angeordnete Abtriebsscheibe geführt ist. Der Antrieb über den Riemen erlaubt auf einfache Weise eine Bewegung der Haltevorrichtung seitlich zur Rollenbahn, ohne dass die Haltevorrichtung bei der Schwenkbewegung mitdreht. Dies wird erreicht, wenn der zweite Antrieb stillsteht, während der Schwenkarm um die erste Drehachse von dem ersten Antrieb angetrieben ist. Über die Antriebsscheibe und die Abtriebsscheibe wird die Haltevorrichtung gegenläufig zur Schwenkbewegung relativ zum Schwenkarm verschwenkt, so dass sich insgesamt eine Parallelverschiebung der Haltevorrichtung ergibt. Durch eine Überlagerung von Bewegungen des ersten und zweite Antriebs können jedoch auch beliebige Überlagerungen der Schwenkbewegung des Schwenkarms und der Drehbewegung der Haltevorrichtung erreicht werden. Vorteilhaft ist der zweite Antrieb koaxial zur ersten Drehachse angeordnet. Dadurch ergibt sich ein einfacher Aufbau.

Vorteilhaft weist die Haltevorrichtung mindestens zwei Aufnahmen auf, an denen Werkstücke oder Werkstückträger gehalten werden können. Dadurch kann der Schwenkarm in einem Arbeitsschritt ein unbearbeitetes Werkstück in den Bearbeitungsbereich transportieren, ein bereits fertig bearbeitetes Werkstück aufnehmen, das unbearbeitete Werkstück absetzen und das bearbeitete Werkstück zur Rollenbahn transportieren und dort absetzen. Dadurch können die Taktzeiten deutlich verringert werden.

Ein Ausführungsbeispiel der Erfindung wird im Folgenden anhand der Zeichnung erläutert. Es zeigen:
- Fig. 1: eine perspektivische Darstellung der Werkstückzuführvorrichtung,
- Fig. 2: eine Ansicht der Werkstückzuführvorrichtung aus Fig. 1 von vorne,
- Fig. 3: eine Ansicht der Werkstückzuführvorrichtung von oben in Richtung des Pfeils III in Fig. 2,
- Fig. 4: eine ausschnittsweise Seitenansicht der Werkstückzuführvorrichtung in Richtung des Pfeils IV in Fig. 2,
- Fig. 5: eine vergrößerte Darstellung des Ausschnitts V in Fig. 2,
- Fig. 6: eine Seitenansicht einer Rollenbahn der Werkstückzuführvorrichtung,
- Fig. 7: eine Draufsicht auf die Rollenbahn aus Fig. 6 in Richtung des Pfeils VII in Fig. 6,
- Fig. 8: eine Seitenansicht der Rollenbahn in Richtung des Pfeils VIII in Fig. 6,
- Fig. 9: eine Ansicht der Rollenbahn von unten in Richtung des Pfeils IX in Fig. 6,
- Fig. 10: eine Schnittdarstellung der Rollenbahn entlang der Linie X-X in Fig. 9,
- Fig. 11: die geschnittene Darstellung der Rollenbahn aus Fig. 10 in perspektivischer Darstellung,
- Fig. 12: eine vergrößerte Darstellung der Rollenbahn aus Fig. 10 im Bereich der Riemenspanneinrichtung,
- Fig. 13: die Rollenbahn in nach oben geklapptem Zustand mit nach unten geschwenkter Antriebseinheit,
- Fig. 14: die Rollenbahn in dem Zustand aus Fig. 13 in perspektivischer Darstellung,
- Fig. 15: eine perspektivische Darstellung der Schwenkeinrichtung der Werkstückzuführvorrichtung,
- Fig. 16: eine ausschnittsweise Darstellung der Schwenkeinrichtung aus Fig. 15 mit aufgenommenem Werkstückträger,
- Fig. 17: die Schwenkeinrichtung aus Fig. 16 in perspektivischer Darstellung mit angehobenem Werkstückträger,
- Fig. 18: die Hubeinrichtung der Werkstückzuführvor- richtung in perspektivischer Darstellung,
- Fig. 19 bis Fig. 21: perspektivische Darstellungen der Schwenkeinrichtung in unterschiedlichen Stellungen,
- Fig. 22: eine perspektivische Darstellung der Schwenkeinrichtung,
- Fig. 23: eine Schnittdarstellung der Schwenkeinrichtung in Längsrichtung des Schwenkarms und durch beide Drehachsen der Antriebe,
- Fig. 24: eine Schnittdarstellung des Schwenkarms auf der Höhe des Riemens,
- Fig. 25: eine Schnittdarstellung des Gehäuses der Schwenkeinrichtung auf der Höhe des Ritzels und des Zahnrads,
- Fig. 26: einen Schnitt durch die Haltevorrichtung auf der Höhe der Zapfen zur Fixierung des Werkstücks.

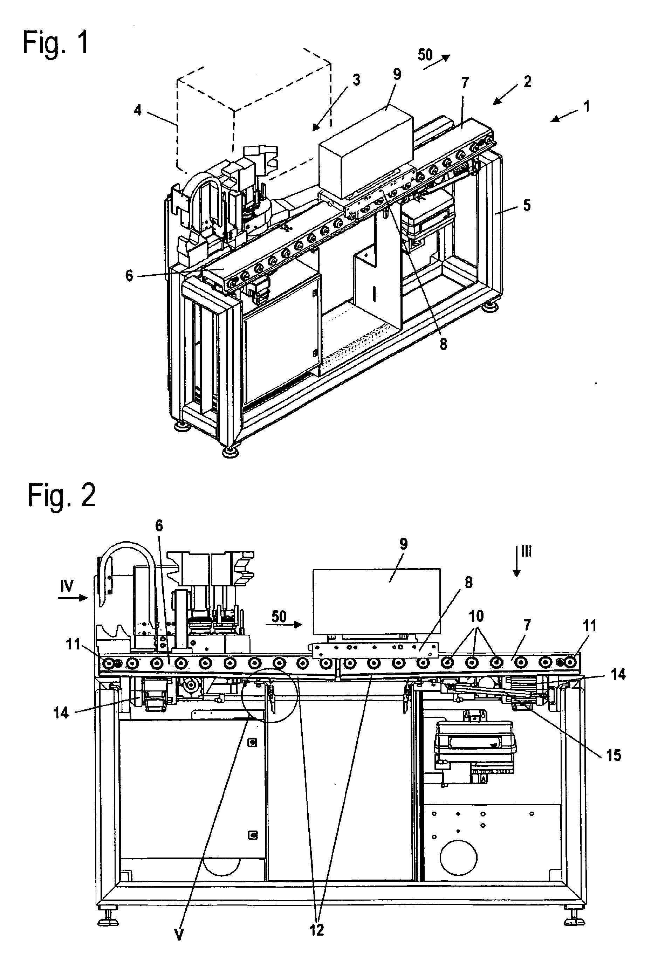

Die in Fig. 1 gezeigte Werkstückzuführvorrichtung 1 dient zum Transport von unbearbeiteten Werkstücken 9 zu einem in Fig. 1 schematisch angedeuteten Bearbeitungsbereich 4 und zum Abtransport von bearbeiteten Werkstücken 9 aus dem Bearbeitungsbereich 4. Der Bearbeitungsbereich 4 kann beispielsweise der Bearbeitungsbereich einer Werkzeugmaschine wie einer Schleifmaschine, einer Fräsmaschine oder dgl. sein. Die Werkstückzuführvorrichtung 1 besitzt ein Gestell 5, an dem eine Rollenfördereinrichtung 2 und eine Schwenkeinrichtung 3 angeordnet sind. Die Rollenfördereinrichtung 2 umfasst zwei identisch aufgebaute Rollenbahnen 6 und 7. Die Rollenbahnen 6 und 7 sind gegensinnig an dem Gestell 5 angeordnet und zum Transport der Werkstücke 9 in Förderrichtung 50 gegensinnig angetrieben. Jedes Werkstück 9 ist auf einem Werkstückträger 8 angeordnet.

Wie Fig. 2 zeigt, besitzen beide Rollenbahnen 6, 7 jeweils eine Vielzahl von Förderrollen 10, die von einem Antrieb 14 angetrieben sind. Außerdem sind Förderrollen vorgesehen, die als nicht angetriebene Endrollen 11 ausgebildet sind. Dies sind bei der ersten Rollenbahn 6 die beidseitig der Rollenbahn 6 angeordneten, in Förderrichtung 50 gesehen ersten Rollen und bei der zweiten Rollenbahn 7 die beiden beidseitig der Rollenbahn 7 angeordneten letzten Rollen. Unterhalb der Förderrollen 10 und der Endrollen 11 erstreckt sich über die gesamte in Förderrichtung 50 gesehene Länge der Rollenbahnen 6 und 7 jeweils eine Tropfrinne 12. Wie Fig. 2 auch zeigt, besitzt jede Rollenbahn 6, 7 eine Gasfeder 15, deren Funktion im Folgenden noch näher erläutert wird. Bei der ersten Rollenbahn 6 ist die Gasfeder 15 hinter der Rollenbahn 6 angeordnet und deshalb in der Darstellung in Fig. 2 nicht sichtbar.

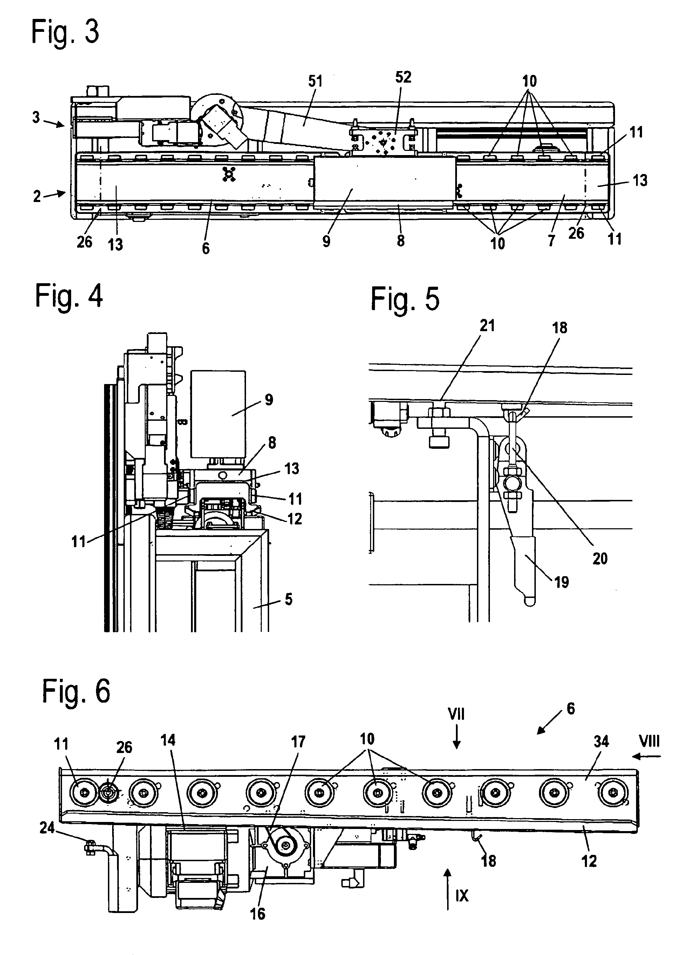

Wie Fig. 3 zeigt, besitzt jede Rollenbahn 6, 7 eine Abdeckung 13, die mittig zwischen und oberhalb von zwei Reihen von Förderrollen 10 bzw. Endrollen 11 angeordnet sind. Wie Fig. 3 auch zeigt, umfasst die Schwenkeinrichtung 3 einen Schwenkarm 51, an dessen auskragendem Ende eine Haltevorrichtung 52 für den Werkstückträger 8 vorgesehen ist.

Wie Fig. 4 zeigt, übergreift der Werkstückträger 8 die Abdeckung 13 und liegt seitlich auf den Endrollen 11 beziehungsweise den Förderrollen 10 auf.

Jede Rollenbahn 6, 7 ist am Gestell 5 um eine Schwenkachse 26 schwenkbar gelagert. Die Schwenkachsen 26 sind in Fig. 3 und in Fig. 6 gezeigt. Zur Fixierung der Rollenbahnen 6, 7 am Gestell 5 in der nach unten geklappten Stellung ist der in Fig. 5 gezeigte Spannhebel 19 mit dem Spannbügel 20 vorgesehen. Der Spannhebel 19 ist an dem Gestell 5 gelagert. Der Spannbügel 20 greift in einen Haken 18 an der Rollenbahn 6 ein und zieht diese nach unten gegen einen Anschlag 21 am Gestell 5. Zur Justage sind der Spannbügel 20 und der Anschlag 21 vorteilhaft verstellbar. Sobald der Spannbügel 20 den Haken 18 freigibt, drückt die Gasfeder 15 (Fig. 2) die Rollenbahn 6 nach oben. Unterhalb der Schwenkachse 26 ist am Gestell 5 eine Einstellschraube 24 angeordnet, an der sich die Rollenbahn 6 in nach oben geklapptem Zustand abstützen kann (Fig. 6).

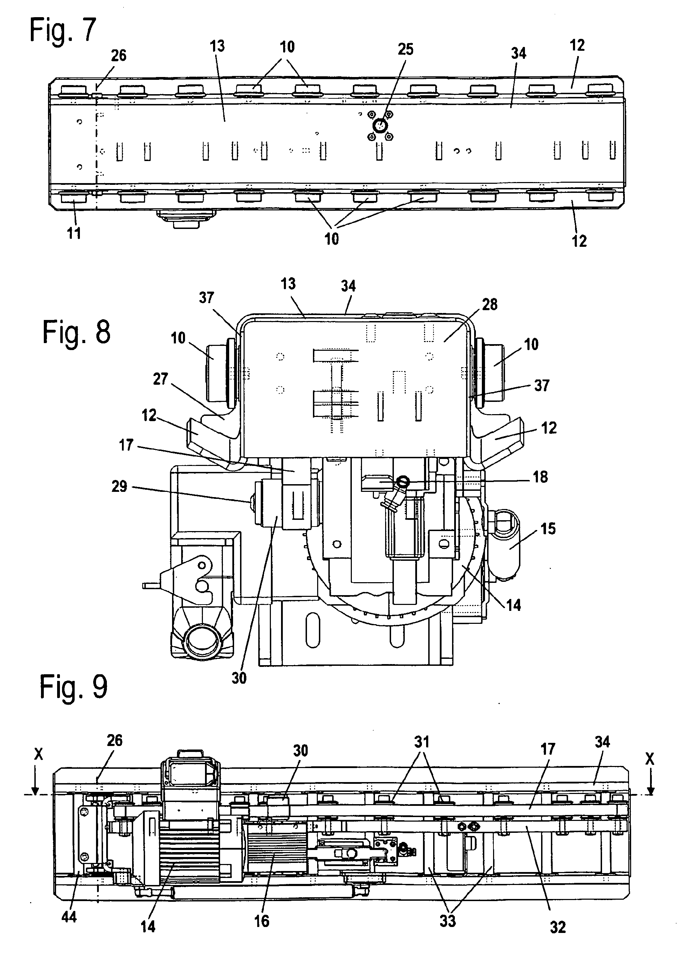

Zum Antrieb der Förderrollen 10 besitzt die Rollenbahn 6 einen Antrieb 14, der über ein Getriebe 16 einen Antriebsriemen 17 antreibt. Der Antriebsriemen 17 ist unter der Abdeckung 13 angeordnet und als Flachriemen ausgebildet. Es kann auch vorgesehen sein, dass der Antriebsriemen 17 als Keilriemen ausgebildet ist. Auch andere Riemen, bei denen die Kraftübertragung über Reibung und nicht über einen Formschluss zwischen dem Riemen und den anzutreibenden Bauteilen erfolgt, können vorteilhaft sein. Die Förderrollen 10 und die Endrollen 11 sind an einem Förderrollenträger 34 angeordnet. Wie Fig. 8 zeigt, umfasst der Förderrollenträger 34 die Abdeckung 13, zwei seitlich der Abdeckung 13 verlaufende Seitenplatten 37 und die zwei unterhalb der Förderrollen 10 angeordnete Tropfrinnen 12. Wie Fig. 6 zeigt, verlaufen die Tropfrinnen 12 zur Mitte der Rollenfördereinrichtung 2 nach unten geneigt, so dass aufgefangenes Schmiermittel ablaufen kann.

Wie Fig. 8 zeigt, umfasst der Förderrollenträger 34 außerdem eine äußere Abdeckplatte 27 und eine innere Abdeckplatte 28. Die innere Abdeckplatte 28 ist dabei die der anderen, zweiten Rollenbahn 7 zugewandte Abdeckplatte und die äußere Abdeckplatte 27 die benachbart zur Schwenkachse 26 und der zweiten Rollenbahn 7 abgewandte Abdeckplatte. Der Förderrollenträger 34 ist aus einem gebogenen Blech gebildet, das die Tropfrinnen 12, die Seitenplatten 37 und die Abdeckung 13 bildet und an dem die Abdeckplatten 27, 28 angeordnet sind. In den Seitenplatten 37 sind die Förderrollen 10 und die Endrollen 11 drehbar gelagert.

Wie Fig. 7 zeigt, besitzt jede Rollenbahn 6, 7 einen Stopper 25, der senkrecht zur Abdeckung 13 beweglich angeordnet ist und bei Bedarf aus der Ebene der Abdeckung 13 nach oben gefahren werden kann und der so Werkstücke 9 beziehungsweise Werkstückträger 8 auf der Rollenbahn 6, 7 positionsgenau anhalten kann.

Wie Fig. 8 zeigt, ist der Antriebsriemen 17 von einer Antriebsrolle 30 angetrieben, die auf einer Antriebswelle 29 drehfest angeordnet ist. Die Antriebswelle 29 ist mit der Ausgangswelle des Getriebes 16 verbunden.

Wie Fig. 9 zeigt, ist der Riemen 30 über eine Vielzahl von Umlenkrollen 31 geführt, die an einem Umlenkrollenträger 32 drehbar gelagert sind. Zwischen den Seitenplatten 37 erstrecken sich Förderwellen 33, an deren Enden jeweils die beiden außerhalb der Seitenplatten 37 angeordneten Förderrollen 10 drehfest angeordnet sind. Auch die Endrollen 11 sind auf einer zwischen den Seitenplatten 37 angeordneten Lagerwelle 44 angeordnet. Der Antriebsriemen 17 ist im Bereich der Förderwellen 33 zwischen den Seitenplatten 37 und zwischen den beiden Reihen von Förderrollen 10 angeordnet.

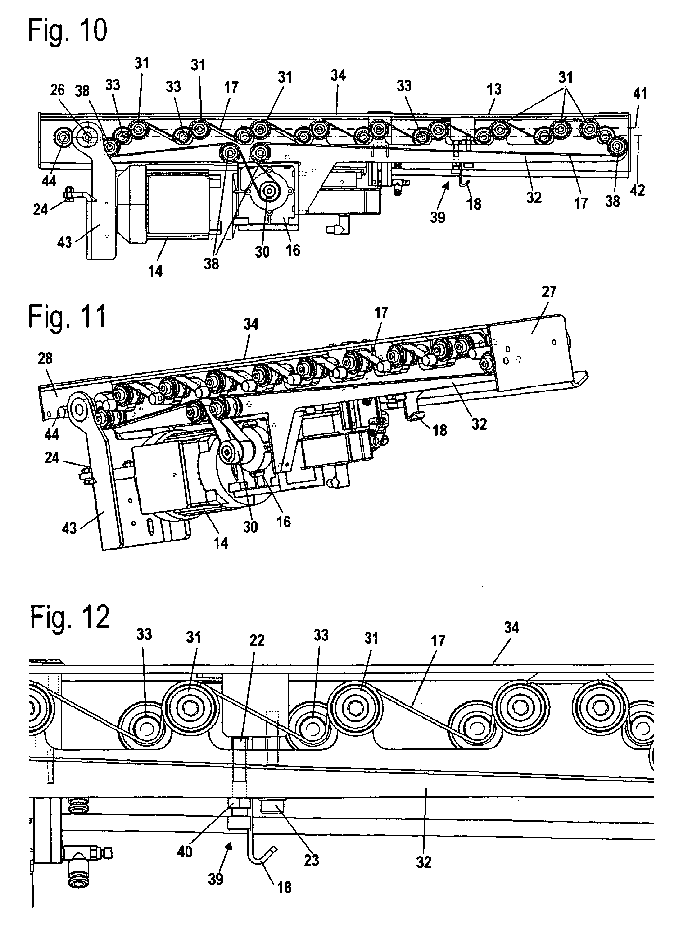

Die Fig. 10 bis 12 zeigen den Verlauf des Antriebsriemens 17. Wie Fig. 10 zeigt, ist der Umlenkrollenträger 32 kammartig ausgebildet. Jeweils mindestens eine Umlenkrolle 31 ragt in den Bereich zwischen zwei Förderwellen 33, so dass der Antriebsriemen 17 zick-zack-förmig um die Förderwellen 33 und die Umlenkrollen 31 geführt ist. Die Drehachsen der Umlenkrollen 31 liegen dabei in einer ersten Ebene 41, die zwischen der Abdeckung 13 und einer zweiten Ebene 42 angeordnet ist. Die zweite Ebene 42 enthält die Drehachsen der Förderwellen 33 und der Förderrollen 10. An der jeweils letzten angetriebenen Förderwelle 33 ist der Antriebsriemen 17 über Umlenkrollen 38 zur Antriebsrolle 30 geführt. Oberhalb der Antriebsrolle 30 sind zwei weitere Umlenkrollen 38 angeordnet.

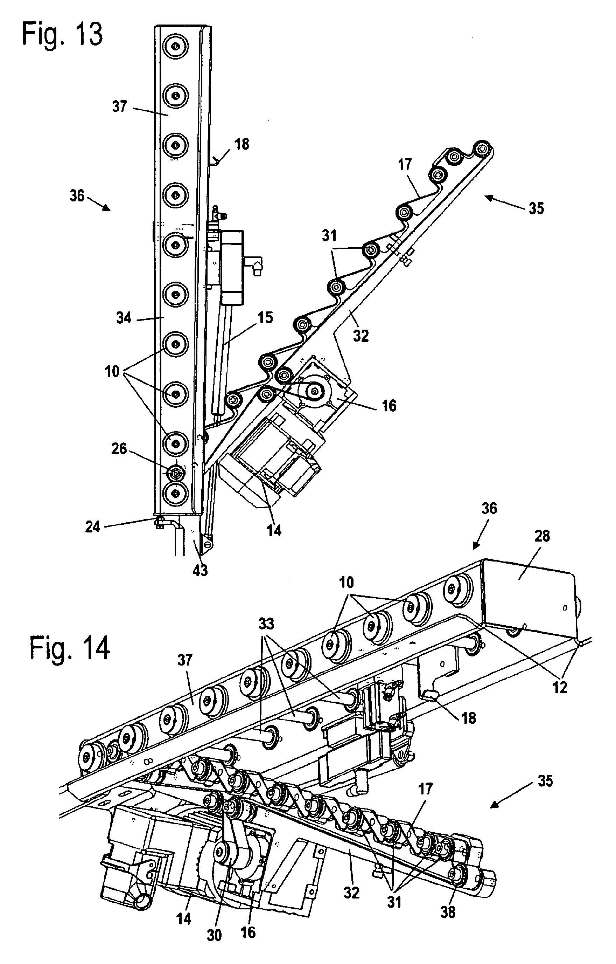

Wie Fig. 10 zeigt, ist die Rollenbahn 6 an einem Träger 43 des Gestells 5 um die Schwenkachse 26 schwenkbar gelagert. In dem nach oben geklappten Zustand, der in Fig. 13 gezeigt ist, liegt die Lagerwelle 44 am Träger 43 an und bildet so einen Anschlag für die Rollenbahn 6.

Wie Fig. 13 zeigt, besitzt die Rollenbahn 6 eine Antriebseinheit 35 und eine Fördereinheit 36. Die Antriebseinheit 35 umfasst den Antrieb 14, das Getriebe 16, den Umlenkrollenträger 32, die Umlenkrollen 31 sowie den Antriebsriemen 17. Die Antriebseinheit 35 ist gegenüber der Fördereinheit 36 um die Schwenkachse 26 schwenkbar gelagert. In der in Fig. 13 gezeigten Stellung, in der die Fördereinheit 36 nach oben geklappt ist, so dass die Lagerwelle 44, die am Förderrollenträger 34 angeordnet ist, am Träger 43 anliegt, und in der die Antriebseinheit 35 gegenüber der Fördereinheit 36 zurückgeschwenkt ist, liegt der Antriebsriemen 17 lose an den Umlenkrollen 31 an. Die Antriebseinheit 35 kann vorteilhaft zu Wartungszwecken bis in die horizontale Lage des Umlenkrollenträgers 32 zurückgeschwenkt werden. Die Fördereinheit 36 wird von der Gasfeder 15 in der nach oben geklappten Stellung gehalten.

Die Antriebseinheit 35 kann beliebig verschwenkt werden, wenn die in Fig. 12 gezeigte Befestigungsschraube 23 gelöst wird. Zur Einstellung der Riemenspannung des Antriebsriemens 17 dient die ebenfalls in Fig. 12 gezeigte Riemenspannvorrichtung 39. Die Riemenspannvorrichtung 39 umfasst eine Anschlagschraube 22, die in den Umlenkrollenträger 32 eingeschraubt und so in diesem gehalten ist und die gegen den Förderrollenträger 34 wirkt. Zur Fixierung der Position der Anschlagschraube 22 ist eine Mutter 40 vorgesehen. Durch Justierung der Anschlagschraube 22 kann die Riemenspannung des Antriebsriemens 17 eingestellt werden. Anschließend wird der Umlenkrollenträger 32 mit der Befestigungsschraube 23 am Förderrollenträger 34 angeschraubt, so dass die Antriebseinheit 35 und die Fördereinheit 36 fest miteinander verbunden sind. Über die Spannung des Antriebsriemens 17, also über den Schwenkabstand von Antriebseinheit 35 und Fördereinheit 36 kann eingestellt werden, wie stark der Antriebsriemen 17 gegen die Förderwellen 33 drückt. Da die Antriebseinheit 35 oder die Fördereinheit 36 um die gleiche Schwenkachse 26 am Träger 43 gelagert sind, können die Antriebseinheit 35 und die Fördereinheit 36 bei gelöstem Spannbügel 20 und bei gelöster Befestigungsschraube 23 beliebig gegeneinander verschwenkt werden, wobei die Verschwenkbewegung der Fördereinheit 36 nach oben von der Gasfeder 15 unterstützt wird.

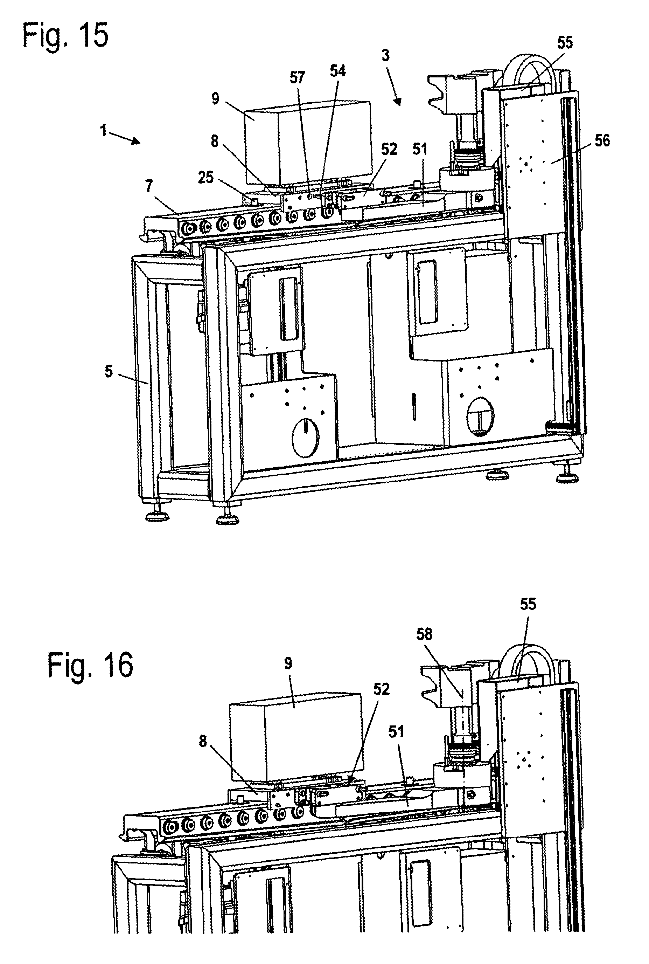

Fig. 15 zeigt die Schwenkeinrichtung 3 der Werkstückzuführvorrichtung 1. Die Schwenkeinrichtung 3 kann auch für eine Werkstückzuführvorrichtung 1 vorteilhaft sein, die keine oder andere als die gezeigten Rollenbahnen 6, 7 besitzt. Die Schwenkeinrichtung 3 besitzt eine Halterung 55, die an einer fest am Gestell 5 angeordneten Führungsplatte 56 in vertikaler Richtung verschiebbar gelagert ist. Wie Fig. 15 zeigt, liegt der Werkstückträger 8 in der Aufnahmestellung, in der die Haltevorrichtung 52 den Werkstückträger 8 aufnimmt, an einem Stopper 25 an. Die Haltevorrichtung 52 besitzt Zapfen 54, die zur Aufnahme des Werkstückträgers 8 in zugeordneten Öffnungen 57 des Werkstückträgers 8 angeordnet werden. Die Zapfen 54 sind dabei vorteilhaft leicht konisch ausgebildet und bewirken eine Zentrierung des Werkstückträgers 8 an den Öffnungen 57.

Fig. 16 zeigt die Schwenkeinrichtung 3, nachdem die Zapfen 54 in den Öffnungen 57 angeordnet wurden. Dies wird durch eine Schwenkbewegung des Schwenkarms 51 um eine erste Drehachse 58 erreicht.

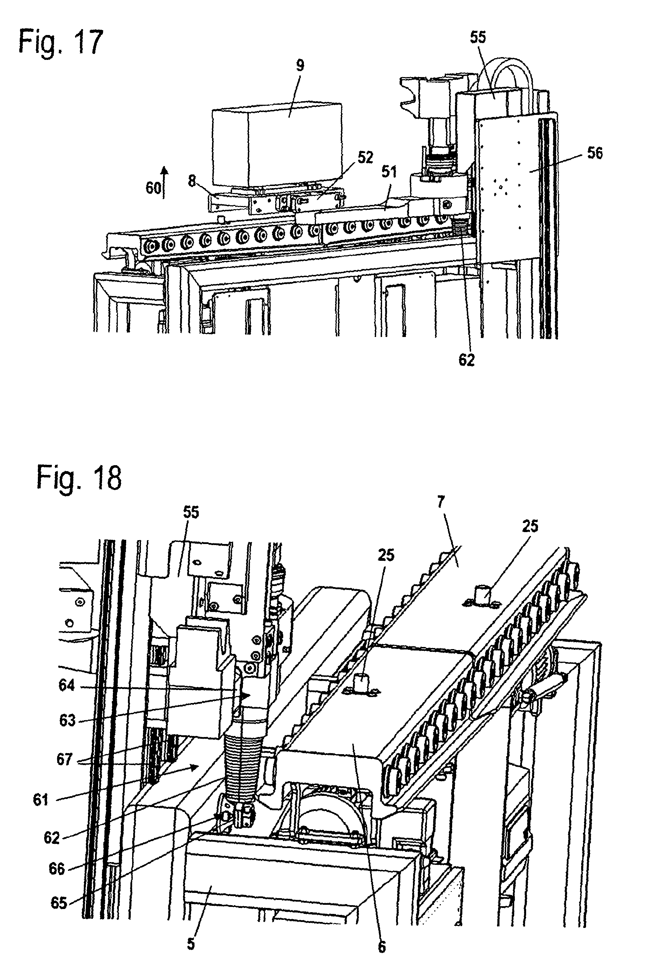

Anschließend wird der Werkstückträger 8 mit dem Werkstück 9 in Richtung des in Fig. 17 gezeigten Pfeils 60 nach oben angehoben. Hierzu wird die Halterung 55 gegenüber der Führungsplatte 56 mit einer Hubeinrichtung 61 verstellt. Die Verstellung erfolgt über eine Hubspindel 62. In Fig. 18 ist die Hubeinrichtung 61 gezeigt. Die Hubeinrichtung 61 ist von einem Antrieb 64 angetrieben und umfasst ein Spindelhubgetriebe 63. Das Spindelhubgetriebe 63 bewegt die Hubspindel 62, die sich über einen Gelenkkopf 65 an einer Abstützung 66 des Gestells 5 abstützt.

Wie Fig. 18 zeigt, besitzt die Führungsplatte 56 zwei Führungsschienen 67, an denen die Halterung 55 geführt ist.

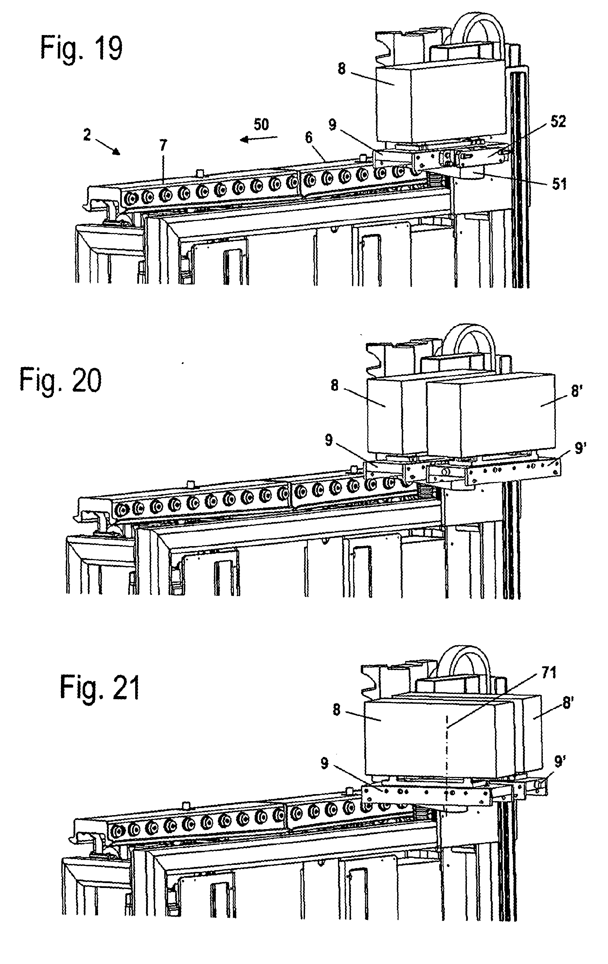

Nachdem der Werkstückträger 8 mit dem Werkstück 9 von den Rollenbahnen 6, 7 abgehoben wurde, wird der Schwenkarm 51 in die in Fig. 19 gezeigte Stellung verschwenkt. Der Werkstückträger 9 wird dabei quer zur Förderrichtung 50 der Rollenfördereinrichtung 2 bewegt, wobei die Längsausrichtung des Werkstückträgers 9 und des Werkstücks 8 erhalten bleibt.

Wie Fig. 20 zeigt, wird im Bearbeitungsbereich 4 ein zweites, bereits fertig bearbeitetes Werkstück 8' aufgenommen, das auf einem Werkstückträger 9' angeordnet ist. Anschließend werden die Werkstücke 8, 8' mit den Werkstückträgern 9, 9' um eine zweite Drehachse 71 gedreht, bis das unbearbeitete Werkstück 8 in der Aufnahmeposition des bearbeiteten Werkstücks 8' liegt. In dieser Position wird der Werkstückträger 9 mit dem Werkstück 8 abgesetzt. Anschließend wird der Schwenkarm 51 mit dem bearbeiteten Werkstück 8' und dem Werkstückträger 9' zurückgeschwenkt, der Werkstückträger 9' wird auf der Rollenfördereinrichtung 2 durch eine Bewegung entgegen des Pfeils 60 in Fig. 17 abgesetzt, und die Zapfen 54 werden aus den Öffnungen 57 gefahren. Anschließend werden die Stopper 25 nach unten gefahren, so dass der Werkstückträger 9' mit dem Werkstück 8' von der Rollenfördereinrichtung 2 weitertransportiert werden kann. Während der Zeit des Rücktransports des bearbeiteten Werkstücks 8' kann das Werkstück 8 bereits bearbeitet werden.

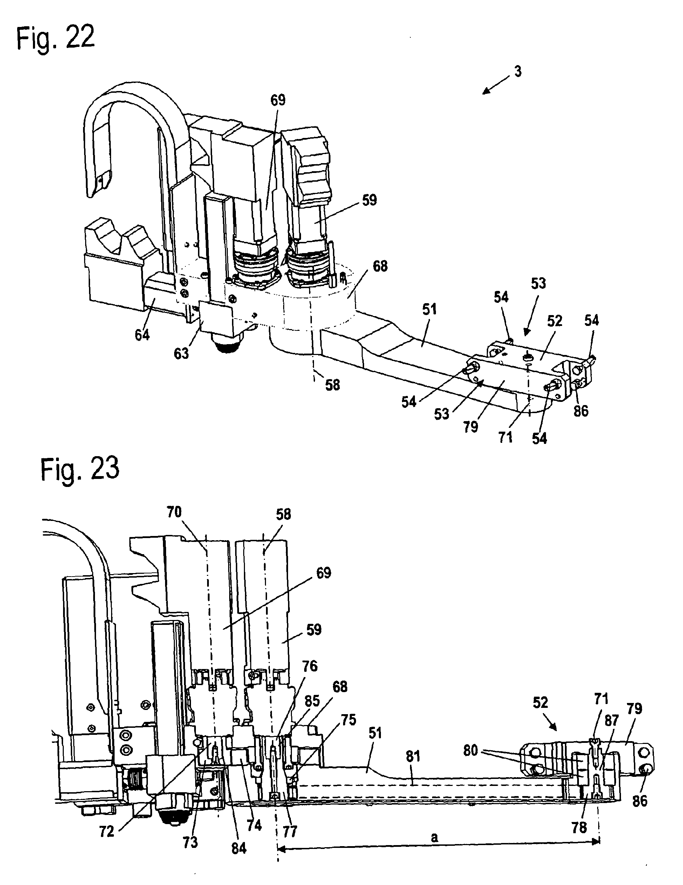

Fig. 22 zeigt die Gestaltung der Schwenkeinrichtung 3. Die Schwenkeinrichtung 3 besitzt ein Gehäuse 68, das fest mit der Halterung 55 verbunden ist. An dem Gehäuse 68 sind zwei Antriebe 59 und 69 angeordnet. Am auskragenden Ende des Schwenkarms 51 ist die Haltevorrichtung 52 um die Drehachse 71 drehbar gelagert. Die Haltevorrichtung 52 besitzt zwei Aufnahmen 53 für Werkstückträger 9 an ihren beiden Längsseiten, die jeweils durch zwei Zapfen 54 gebildet werden. Die Haltevorrichtung 52 ist im Wesentlichen durch eine Platte 79 gebildet, an der die Zapfen 54 gehalten sind. An der Platte 79 sind außerdem Einstellschrauben 86 benachbart zu jedem Zapfen 54 vorgesehen, über die die Einschubtiefe 54 in die Werkstückträger 9, 9' eingestellt werden kann. Die Aufnahmen 53 können auch zur Aufnahme von Werkstücken 8 vorgesehen sein.

Die Fig. 23 bis 26 zeigen den Aufbau der Schwenkeinrichtung 3 im Einzelnen. An dem Gehäuse 68 sind die beiden Antriebe 59 und 69 angeordnet. Der erste Antrieb 69 besitzt eine Abtriebswelle 72, an der ein Ritzel 73 festgelegt ist. Das Ritzel 73 ist an der Abtriebswelle 72 über eine Toleranzfeder 84 fixiert. Die Toleranzfeder 84 stellt gleichzeitig eine Überlastsicherung dar. Wenn am Ritzel 73 eine unzulässig große Gegenkraft wirkt, werden die Reibkräfte zwischen Abtriebswelle 72 und Ritzel 73 überwunden und die Abtriebswelle 72 dreht sich gegenüber dem Ritzel 73. Das Ritzel 73 treibt ein Zahnrad 74 an, das koaxial zur ersten Drehachse 58 angeordnet und drehfest mit dem Schwenkarm 51 verbunden ist. Über den ersten Antrieb 69 kann der Schwenkarm 51 verschwenkt werden.

Der zweite Antrieb 59 ist koaxial zur ersten Drehachse 58 angeordnet. Die Drehachse 70 des zweiten Antriebs 69 ist in einem Abstand hierzu angeordnet. Beide Drehachsen 58 und 70 sind parallel zueinander ausgerichtet. Der zweite Antrieb 59 besitzt eine Abtriebswelle 76, die über eine Toleranzfeder 85 mit einer Antriebsscheibe 77 verbunden ist. Die Antriebsscheibe 77 ist vorteilhaft als Zahnriemenscheibe ausgebildet. Auch hier stellt eine Toleranzfeder 85 eine Überlastsicherung dar. Die Antriebsscheibe 77 besitzt einen verlängerten Stutzen, der die Abtriebswelle 76 übergreift. Am Außenumfang des Stutzens ist ein Lagerring 75 angeordnet, mit dem der Arm 51 mit dem Zahnrad 74 gegenüber der Abtriebswelle 76 und der Antriebsscheibe 77 drehbar gelagert ist.

Die Antriebsscheibe 77 treibt einen in dem Schwenkarm 71 angeordneten Riemen 81 an, der vorteilhaft als Zahnriemen ausgebildet ist. Der Zahnriemen ist über eine Abtriebsscheibe 78 geführt, die koaxial zur zweiten Drehachse 71 der Haltevorrichtung 52 angeordnet ist. Auch die Abtriebsscheibe 78 ist vorteilhaft als Zahnriemenscheibe ausgebildet. Die zweite Drehachse 71 ist in einem Abstand a zu der ersten Drehachse 58 angeordnet. Die Abtriebsscheibe 78 ist drehfest mit der Platte 79 der Haltevorrichtung 52 verbunden. Am Außenumfang eines Stutzens 87, der an der Abtriebsscheibe 78 angeformt ist, sind Lager 80 vorgesehen, die die Abtriebsscheibe 78 gegenüber dem Gehäuse des Schwenkarms 51 drehbar lagern.

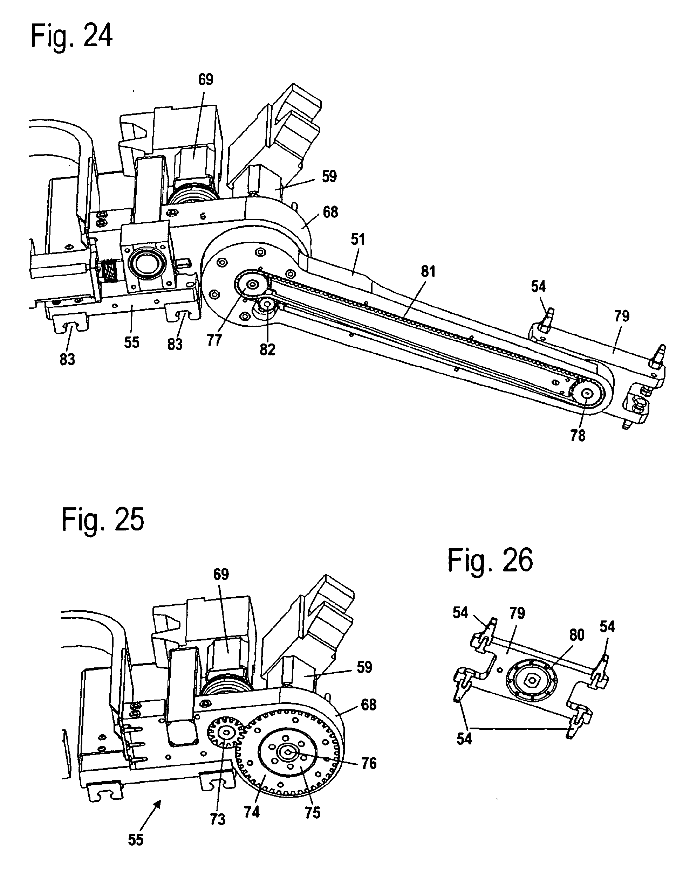

Zum Spannen des Riemens 81 ist die in Fig. 24 gezeigte Spannrolle 82 vorgesehen, die benachbart zur Antriebsscheibe 77 gegen den Riemen 81 drückt und deren Position einstellbar ist. Fig. 24 zeigt außerdem Führungsnuten 83, mit denen die Halterung 55 an den Führungsschienen 67 (Fig. 18) geführt ist.

Zum Verschwenken des Schwenkarms 51 wird der erste Antrieb 69 um die dritte Drehachse 70 rotierend angetrieben. Dadurch treibt das Ritzel 73 das Zahnrad 74 an, und der Schwenkarm 51 wird bewegt. Der Antrieb 59 steht dabei vorteilhaft fest. Aufgrund der Schwenkbewegung des Schwenkarms 51 wird der Riemen 81 um einen Winkel verdreht, der dem Schwenkwinkel des Schwenkarms 51 entspricht. Um diesen Winkel wird die Abtriebsscheibe 78 in Gegenrichtung verschwenkt, so dass die Ausrichtung der Haltevorrichtung 52 bei einer Schwenkbewegung des Schwenkarms 51 gleich bleibt. Die beiden zwischen Antriebsscheibe 77 und Abtriebsscheibe 78 geführten Abschnitte des Riemens 81 bilden ein Parallelogramm, das zu einer Parallelverschiebung der Haltevorrichtung 52 führt.

Um die Haltevorrichtung 52 um ihre Drehachse 71 zu drehen, wird der zweite Antrieb 59 um die Drehachse 58 angetrieben. Über den Riemen 81 wird die Drehbewegung auf die Haltevorrichtung 52 übertragen. Der Schwenkarm 51 kann dabei vorteilhaft stillstehen. Hierzu wird der Antrieb 69 nicht betätigt.

Es kann auch vorteilhaft sein, beide Antriebe 59 und 69 gleichzeitig zu betätigen, um sowohl eine Schwenkbewegung des Schwenkarms 51 um die Drehachse 58 als auch eine Drehbewegung der Haltevorrichtung 52 um die Drehachse 71 zu erreichen. Die Antriebe 59 und 69 und vorteilhaft auch der Antrieb 64 sind Servoantriebe, die vorteilhaft eine Steuerung besitzen und direkt über ein Bussystem angesteuert werden können. Da jeweils nur einer der Antriebe 59, 64 und 69 angesteuert werden muss und kein zeitgleicher Betrieb von zwei oder allen drei Antrieben notwendig ist, ist die Ansteuerung über ein Bussystem einfach möglich. Es können jedoch auch andere Ansteuerungen vorteilhaft sein, insbesondere, wenn zur Erzeugung einer überlagerten Bewegung zwei Antriebe gleichzeitig angesteuert werden sollen.

## Patentansprüche

1. Werkstückzuführvorrichtung mit einer Rollenfördereinrichtung (2), die mindestens eine Rollenbahn (6, 7) umfasst, wobei die Rollenbahn (6, 7) mindestens zwei in Förderrichtung (50) beabstandete, angetriebene Förderrollen (10) aufweist, und wobei alle angetriebenen Förderrollen (10) über einen gemeinsamen Antriebsriemen (17) über Reibung angetrieben sind-,
**dadurch gekennzeichnet, dass** die Rollenbahn (6, 7) schwenkbar an einem Gestell (5) der Werkstückzuführvorrichtung (1) gelagert ist.

2. Werkstückzuführvorrichtung nach Anspruch 1,
**dadurch gekennzeichnet, dass** die Rollenbahn (6, 7) eine mittige Abdeckung (13) umfasst, wobei die Förderrollen (10) in Förderrichtung (50) gesehen seitlich der Abdeckung (13) angeordnet sind und wobei der Antriebsriemen (17) unterhalb der Abdeckung (13) angeordnet ist.

3. Werkstückzuführvorrichtung nach Anspruch 2,
**dadurch gekennzeichnet, dass** jeweils mindestens eine, insbesondere zwei Förderrollen (10) drehfest mit einer unterhalb der Abdeckung (13) angeordneten Förderwelle (33) verbunden sind, wobei der Antriebsriemen (17) an mindestens zwei Förderwellen (33) anliegt und diese antreibt.

4. Werkstückzuführvorrichtung nach einem der Ansprüche 1 bis 3,
**dadurch gekennzeichnet, dass** alle Förderrollen (10) der Rollenbahn (6, 7), höchstens mit Ausnahme von Endrollen (11), von dem Antriebsriemen (17) angetrieben sind.

5. Werkstückzuführvorrichtung nach Anspruch 3 oder 4,
**dadurch gekennzeichnet, dass** der Antriebsriemen (17) über mehrere Umlenkrollen (31) geführt ist, wobei der Antriebsriemen (17) von den Umlenkrollen (31) gegen die Förderwellen (33) gedrückt wird.

6. Werkstückzuführvorrichtung nach einem der Ansprüche 2 bis 5,
**dadurch gekennzeichnet, dass** die Abdeckung (13) mit zwei in Förderrichtung (50) verlaufenden Seitenplatten (37) und an den Seitenplatten (37) unterhalb der Förderrollen (10) angeordneten Tropfrinnen (12) einteilig, insbesondere aus einem gebogenen Blech, ausgebildet ist.

7. Werkstückzuführvorrichtung nach einem der Ansprüche 1 bis 6,
**dadurch gekennzeichnet, dass** die Rollenbahn (6, 7) eine Antriebseinheit (35) und eine Fördereinheit (36) umfasst, wobei die Antriebseinheit (35) den Antriebsriemen (17) umfasst und wobei die Fördereinheit (36) die Förderrollen (10) umfasst.

8. Werkstückzuführvorrichtung nach Anspruch 7,
**dadurch gekennzeichnet, dass** zur Einstellung der Riemenspannung des Antriebsriemens (17) die relative Lage der Antriebseinheit (35) gegenüber der Fördereinheit (36) einstellbar ist.

9. Werkstückzuführvorrichtung nach Anspruch 7 oder 8,
**dadurch gekennzeichnet, dass** die Antriebseinheit (35) gegenüber der Fördereinheit (36) schwenkbar ist.

10. Werkstückzuführvorrichtung nach einem der Ansprüche 1 bis 9,
**dadurch gekennzeichnet, dass** die Werkstückzuführvorrichtung (1) einen Schwenkarm (51) zum Transport von Werkstücken (9) zwischen der Rollenbahn (6, 7) und einem Bearbeitungsbereich (4) aufweist.

11. Werkstückzuführvorrichtung nach Anspruch 10,
**dadurch gekennzeichnet, dass** der Schwenkarm (51) an einer Halterung (55) angeordnet ist, die gegenüber dem Gestell (5) der Werkstückzuführvorrichtung (1) höhenverstellbar angeordnet ist.

12. Werkstückzuführvorrichtung nach Anspruch 10 oder 11,
**dadurch gekennzeichnet, dass** der Schwenkarm (51) gegenüber dem Gestell (5) der Werkstückzuführvorrichtung (1) von einem ersten Antrieb (69) um eine erste Drehachse (58) schwenkbar ist.

13. Werkstückzuführvorrichtung nach Anspruch 12,
**dadurch gekennzeichnet, dass** der erste Antrieb (69) mit der Halterung (55) verbunden ist, wobei der erste Antrieb (69) über ein Ritzel (73) ein koaxial zur ersten Drehachse (58) angeordnetes, mit dem Schwenkarm (51) verbundenes Zahnrad (74) antreibt.

14. Werkstückzuführvorrichtung nach Anspruch 12 oder 13,
**dadurch gekennzeichnet, dass** der Schwenkarm (51) eine Haltevorrichtung (52) für mindestens ein Werkstück (9) aufweist, die in einem Abstand (a) zur ersten Drehachse (58) angeordnet ist und die um eine zweite Drehachse (71) drehbar ist, die parallel zur ersten Drehachse (58) verläuft.

15. Werkstückzuführvorrichtung nach Anspruch 14,
**dadurch gekennzeichnet, dass** die Haltevorrichtung (52) um die zweite Drehachse (71) von einem zweiten Antrieb (59) angetrieben ist, der mit der Halterung (55) verbunden ist.

16. Werkstückzuführvorrichtung nach Anspruch 15,
**dadurch gekennzeichnet, dass** der zweite Antrieb (59) die Haltevorrichtung (52) um die zweite Drehachse (71) über einen Riemen (81) antreibt, der an einem Schwenkarm (51) über eine koaxial zur ersten Drehachse (58) angeordnete Antriebsscheibe (77) und eine koaxial zur zweiten Drehachse (71) angeordnete Abtriebsscheibe (78) geführt ist.

17. Werkstückzuführvorrichtung nach Anspruch 15 oder 16,
**dadurch gekennzeichnet, dass** der zweite Antrieb (59) koaxial zur ersten Drehachse (58) angeordnet ist.

18. Werkstückzuführvorrichtung nach einem der Ansprüche 14 bis 17,
**dadurch gekennzeichnet, dass** die Haltevorrichtung (52) mindestens zwei Aufnahmen (53) aufweist.

## Claims

1. Workpiece feeding device comprising a roller conveyor device (2) with at least one roller track (6, 7), wherein the roller track (6, 7) comprises at least two driven conveying rollers (10) spaced in the conveying direction (50) and wherein all driven conveying rollers (10) are friction-driven via a common drive belt (17), **characterised in that** the roller track (6, 7) is pivotably mounted on a frame (5) of the workpiece feeding device (1).

2. Workpiece feeding device according to claim 1,
**characterised in that** the roller track (6, 7) includes a central cover (13), wherein the conveying rollers (10) are disposed at the side of the cover (13) as viewed in the conveying direction (50) and wherein the drive belt (17) is disposed below the cover (13).

3. Workpiece feeding device according to claim 2,
**characterised in that** at least one and in particular two of the conveying rollers (10) is/are non-rotatably connected to a conveying shaft (33) each which is disposed below the cover (13), the drive belt (17) bearing against at least two conveying shafts (33) to drive them.

4. Workpiece feeding device according to any of claims 1 to 3,
**characterised in that** all conveying rollers (10) of the roller track (6, 7), at most with the exception of end rollers (11), are driven by the drive belt (17).

5. Workpiece feeding device according to claim 3 or 4,
**characterised in that** the drive belt (17) is guided over a plurality of deflection pulleys (31), the drive belt (17) being pushed against the conveying shafts (33) by the deflection pulleys (31).

6. Workpiece feeding device according to any of claims 2 to 5,
**characterised in that** the cover (13) with two side plates (37) extending in the conveying direction (50) and with drip troughs (12) provided on the side plates (37) below the conveying rollers (10) is produced in one piece, in particular from bent sheet metal.

7. Workpiece feeding device according to any of claims 1 to 6,
**characterised in that** the roller track (6, 7) comprises a drive unit (35) and a conveying unit (36), the drive unit (35) comprising the drive belt (17) and the conveying unit (36) comprising the conveying rollers (10).

8. Workpiece feeding device according to claim 7,
**characterised in that** the position of the drive unit (35) is adjustable relative to the conveying unit (36) for adjusting the tension of the drive belt (17).

9. Workpiece feeding device according to claim 7 or 8,
**characterised in that** the drive unit (35) is pivotable relative to the conveying unit (36).

10. Workpiece feeding device according to any of claims 1 to 9,
**characterised in that** the workpiece feeding device (1) comprises a swivel arm (51) for conveying workpieces (9) between the roller track (6, 7) and a machining region (4).

11. Workpiece feeding device according to claim 10,
**characterised in that** the swivel arm (51) is mounted on a holder (55) which is vertically adjustable relative to the frame (5) of the workpiece feeding device (1).

12. Workpiece feeding device according to claim 10 or 11,
**characterised in that** the swivel arm (51) is pivotable by means of a first drive (69) about a first axis of rotation (58) relative to the frame (5) of the workpiece feeding device (1).

13. Workpiece feeding device according to claim 12,
**characterised in that** the first drive (69) is connected to the holder (55), the first drive (69) driving a gear (74) arranged coaxially with the first axis of rotation (58) and connected to the swivel arm (51) via a pinion (73).

14. Workpiece feeding device according to claim 12 or 13,
**characterised in that** the swivel arm (51) comprises a holding device (52) for at least one workpiece (9), which is located at a distance (a) from the first axis of rotation (58) and which is rotatable about a second axis of rotation (71) extending parallel to the first axis of rotation (58).

15. Workpiece feeding device according to claim 14,
**characterised in that** the holding device (52) is driven about the second axis of rotation (71) by a second drive (59) which is connected to the holder (55).

16. Workpiece feeding device according to claim 15,
**characterised in that** the second drive (59) drives the holding device (52) about the second axis of rotation (71) by way of a belt (81) guided over a drive pulley (77) coaxial with the first axis of rotation (58) and a driven pulley (78) coaxial with the second axis of rotation (71).

17. Workpiece feeding device according to claim 15 or 16,
**characterised in that** the second drive (59) is coaxial with the first axis of rotation (58).

18. Workpiece feeding device according to any of claims 14 to 17, **characterised in that** the holding device (52) comprises at least two locations (53).

## Revendications

1. Dispositif d'alimentation en pièces avec un dispositif de transport à rouleaux (2) qui comprend au moins un convoyeur à rouleaux (6, 7), le convoyeur à rouleaux (6, 7) présentant au moins deux rouleaux de transport entraînés (10) qui sont espacés dans le sens de transport (50), et tous les rouleaux de transport entraînés (10) étant entraînés par friction par l'intermédiaire d'une courroie d'entraînement commune (17),
**caractérisé en ce que** le convoyeur à rouleaux (6, 7) est monté pivotant sur un châssis (5) du dispositif d'alimentation en pièces (1).

2. Dispositif d'alimentation en pièces selon la revendication 1,
**caractérisé en ce que** le convoyeur à rouleaux (6, 7) comprend un recouvrement central (13), les rouleaux de transport (10) étant disposés sur les côtés du recouvrement (13), vus dans le sens de transport (50), et la courroie d'entraînement (17) étant disposée au-dessous du recouvrement (13).

3. Dispositif d'alimentation en pièces selon la revendication 2,
**caractérisé en ce qu'**au moins un, en particulier deux rouleaux de transport (10) sont reliés, fixes en rotation, à un arbre de transport (33) disposé au-dessous du recouvrement (13), la courroie d'entraînement (17) étant appliquée contre au moins deux arbres de transport (33) et entraînant ceux-ci.

4. Dispositif d'alimentation en pièces selon l'une des revendications 1 à 3,
**caractérisé en ce que** tous les rouleaux de transport (10) du convoyeur à rouleaux (6, 7), au maximum à l'exception de rouleaux d'extrémité (11), sont entraînés par la courroie d'entraînement (17).

5. Dispositif d'alimentation en pièces selon la revendication 3 ou 4, **caractérisé en ce que** la courroie d'entraînement (17) passe sur plusieurs rouleaux de déviation (31), la courroie d'entraînement (17) étant pressée par ceux-ci contre les arbres de transport (33).

6. Dispositif d'alimentation en pièces selon l'une des revendications 2 à 5, **caractérisé en ce que** le recouvrement (13) est formé d'une seule pièce, en particulier à partir d'une tôle pliée, avec deux plaques latérales (37) qui s'étendent dans le sens de transport (50) et avec des gouttières (12) qui sont disposées sur les plaques latérales (37) au-dessous des rouleaux de transport (10).

7. Dispositif d'alimentation en pièces selon l'une des revendications 1 à 6, **caractérisé en ce que** le convoyeur à rouleaux (6, 7) comprend une unité d'entraînement (35) et une unité de transport (36), l'unité d'entraînement (35) comprenant la courroie d'entraînement (17), et l'unité de transport (36) comprenant les rouleaux de transport (10).

8. Dispositif d'alimentation en pièces selon la revendication 7,
**caractérisé en ce que** pour le réglage de la tension de la courroie d'entraînement (17), la position relative de l'unité d'entraînement (35) par rapport à l'unité de transport (36) est réglable.

9. Dispositif d'alimentation en pièces selon la revendication 7 ou 8, **caractérisé en ce que** l'unité d'entraînement (35) est apte à pivoter par rapport à l'unité de transport (36).

10. Dispositif d'alimentation en pièces selon l'une des revendications 1 à 9, **caractérisé en ce qu'**il présente un bras pivotant (51) pour le transport de pièces (9) entre le convoyeur à rouleaux (6, 7) et une zone de traitement (4).

11. Dispositif d'alimentation en pièces selon la revendication 10,
**caractérisé en ce que** le bras pivotant (51) est disposé sur un support (55) qui est disposé pour pouvoir être réglé en hauteur par rapport au châssis (5) du dispositif d'alimentation en pièces (1).

12. Dispositif d'alimentation en pièces selon la revendication 10 ou 11, **caractérisé en ce que** le bras pivotant (51) est apte à pivoter sur un premier axe de rotation (58), grâce à un premier entraînement (69), par rapport au châssis (5) du dispositif d'alimentation en pièces (1).

13. Dispositif d'alimentation en pièces selon la revendication 12,
**caractérisé en ce que** le premier entraînement (69) est relié au support (55), le premier entraînement (69) entraînant par l'intermédiaire d'un pignon (73) une roue dentée (74) qui est disposée coaxialement par rapport au premier axe de rotation (58) et qui est reliée au bras pivotant (51).

14. Dispositif d'alimentation en pièces selon la revendication 12 ou 13, **caractérisé en ce que** le bras pivotant (51) présente un dispositif de support (52) pour au moins une pièce (9), qui est disposé à une distance (a) du premier axe de rotation (58) et qui est apte à tourner sur un second axe de rotation (71) parallèle au premier axe de rotation (58).

15. Dispositif d'alimentation en pièces selon la revendication 14,
**caractérisé en ce que** le dispositif de support (52) est entraîné sur le second axe de rotation (71) par un second entraînement (59) qui est relié au support (55).

16. Dispositif d'alimentation en pièces selon la revendication 15,
**caractérisé en ce que** le second entraînement (59) entraîne le dispositif de support (52) sur le second axe de rotation (71) par l'intermédiaire d'une courroie (81) qui, au niveau d'un bras pivotant (51), passe sur une poulie d'entraînement (77) disposée coaxialement par rapport au premier axe de rotation (58) et sur une poulie réceptrice (78) disposée coaxialement par rapport au second axe de rotation (71).

17. Dispositif d'alimentation en pièces selon la revendication 15 ou 16, **caractérisé en ce que** le second entraînement (59) est disposé coaxialement par rapport au premier axe de rotation (58).

18. Dispositif d'alimentation en pièces selon l'une des revendications 14 à 17, **caractérisé en ce que** le dispositif de support (52) présente au moins deux logements (53).
